# EUROPEAN PATENT SPECIFICATION

(11) **EP 4 474 679 B1**
(45) Date of publication and mention of the grant of the patent: **18.03.2026**
(21) Application number: 24180664.5
(22) Date of filing: 07.06.2024
(51) Int. Cl.: F16H 57/04

(54) **TRANSMISSION SYSTEM AND VEHICLE**
GETRIEBESYSTEM UND FAHRZEUG
SYSTÈME DE TRANSMISSION ET VÉHICULE

(30) Priority: 09.06.2023 CN 202310686648
(43) Date of publication of application: 11.12.2024
(73) Proprietor: Valeo eAutomotive Germany GmbH, 91056 Erlangen (DE)
(72) Inventor: CHEN, Xucan, 91056 Erlangen (DE); JIN, Yejin, 91056 Erlangen (DE); SUN, Yawei, 91056 Erlangen (DE)
(74) Representative: Valeo Powertrain Systems

(56) References cited:
- JP-B2- 7 281 639
- US-A1- 2019 145 509
- US-A1- 2023 087 205
- US-B2- 10 823 279
- US-B2- 7 059 443

## Description

### Technical Field

The present invention relates to a transmission system for a vehicle, and a vehicle that has the transmission system.

### Background Art

In a vehicle, particularly an electric vehicle, an integrated transmission system is used, comprising a motor and a reducer. In order to lubricate the reducer, an oil lubrication system is used; at the same time, an oil cooling system and an independent air cooling system are also used to cool the motor. In the design of a transmission system in the prior art, after a gearbox is mounted in place in a vehicle, a lubricating medium, which is inside a box body of the gearbox for lubricating various transmission components, is deposited at the bottom of the box body, and the rotation of gears in the gearbox stirs the lubricating medium at the bottom of the box body, such that the lubricating medium splashes nearby components to lubricate same. To save on lubricating medium, a pump apparatus is further used for pumping the lubricating medium that is used for lubricating the gears to the motor to cool same. As requirements in terms of mounting space intensiveness and structural simplification continuously increase, the design of the transmission system in the prior art cannot satisfy needs, and further, overall weight is increased due to additionally providing the pump apparatus. Document US7059443B2 shows a transmission system of the prior art.

### Summary of the Invention

In view of this, the technical problem to be solved by the present invention lies in providing a structurally simple and spatially intensive transmission system for a vehicle, and a vehicle that has the transmission system.

In order to solve the above technical problem, the present invention provides a transmission system for a vehicle, comprising the features of claim 1.

According to the present invention, the fluid passage extends from a first gear of the reducer to a motor shaft of the motor to guide a lubricating medium to the motor by means of the fluid passage to cool the motor.

Thus, a fluid passage that is substantially sealed to the outside is formed, so that the lubricating medium can be actively guided more precisely.

The bottom wall and the first side wall are respectively integrally cast with the cover part, thereby simplifying the manufacturing process and increasing strength. Optionally, the top wall may also be integrally constructed with the cover part.

More preferably, the lubrication system comprises a baffle forming a second side wall of the fluid passage remote from the housing, said second side wall being fixedly connected to the bottom wall.

Preferably, an inlet of the fluid passage is directed to a first gear of the reducer to receive a lubricating medium transmitted from the first gear of the reducer so that it can be fed into the fluid passage via the inlet.

More preferably, the housing wall of the main housing at least partially surrounds the first gear, and at the inlet of the fluid passage, an extension line of the top wall of the fluid passage is tangent to the housing wall surrounding the first gear. Thus, an upper edge of the fluid passage is tangent to the housing wall surrounding the first gear, so that an inlet of the fluid passage faces, to the maximum extent, lubricating medium that is flung out by the first gear when rotating, and collects as much lubricating medium as possible conveyed out from the reducer, and transmits same to the motor, thereby saving on material costs.

Preferably, an outlet of the fluid passage extends downward from a bottom wall of the fluid passage and is in communication with a hollow cavity of the motor shaft.

More preferably, the hollow cavity includes at least one perforation extending in a radial direction.

More preferably, a negative pressure is generated in the hollow cavity by the rotation of the motor shaft, thereby pumping the lubricating medium from the reducer to the motor via the fluid passage. Thus, lubricating medium is actively conveyed from the reducer to the motor without the need for an additionally configured pump apparatus. The structure is simplified, and the overall weight of the transmission system is reduced.

Preferably, the branch passage includes a hollow protrusion extending outwardly from the second side wall, wherein the protrusion includes a branch outlet.

Preferably, the first gear is a reducer gear. Optionally, the first gear may also be another gear of the reducer.

To solve the technical problem described above, the present invention further provides a vehicle comprising the transmission system described above.

### Brief Description of the Drawings

In order to more clearly explain the technical solutions of embodiments of the present invention, the drawings of the embodiments are briefly described below, wherein it is evident that the drawings in the following description only relate to some embodiments of the present invention, rather than limiting the present invention.
Fig. 1 schematically shows a front view of a transmission system according to the present invention;
Fig. 2 schematically shows a 3D view of the transmission system shown in Fig. 1;
Fig. 3 schematically shows a partial cut-away view of a fluid passage of the transmission system shown in Fig. 1;
Fig. 4 schematically shows another view of the transmission system shown in Fig. 1;
Fig. 5 schematically shows another partial cut-away view of the transmission system shown in Fig. 1; and
Fig. 6 schematically shows a 3D view of a second side wall of the fluid passage shown in Fig. 3.

### Detailed Description of Embodiments

The technical solutions in embodiments of the present invention will be described clearly and completely below with reference to the drawings in embodiments of the present invention. Obviously, the embodiments described are only some, not all, of the embodiments of the present invention. All other embodiments obtained by those skilled in the art based on embodiments of the present invention without inventive effort shall all fall within the scope of protection of the present invention.

The expression "an embodiment" or "embodiment" as used herein means a specific feature, structure or characteristic that may be included in at least one implementation of the present invention. In the description of the present invention, it should be understood that orientational or positional relationships indicated by the terms "up", "down", "left", "right", "top" "bottom", etc. are based on the orientational or positional relationships shown in the drawings, and are merely intended to facilitate and simplify the description of the present invention, rather than indicating or implying that the apparatus or element referred to must have a specific orientation or be constructed and operated in a specific orientation, and therefore should not be construed as limiting the present invention.

In the present invention, "axial direction" refers to the direction of the central axis of the first gear of the reducer, and "radial direction" refers to a direction that is perpendicular to the central axis.

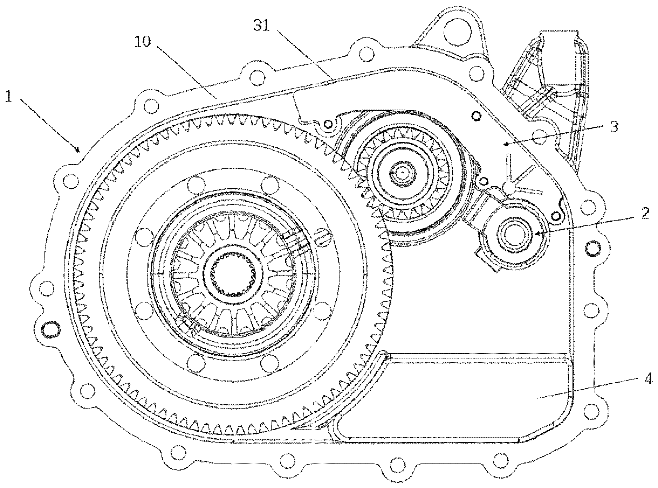

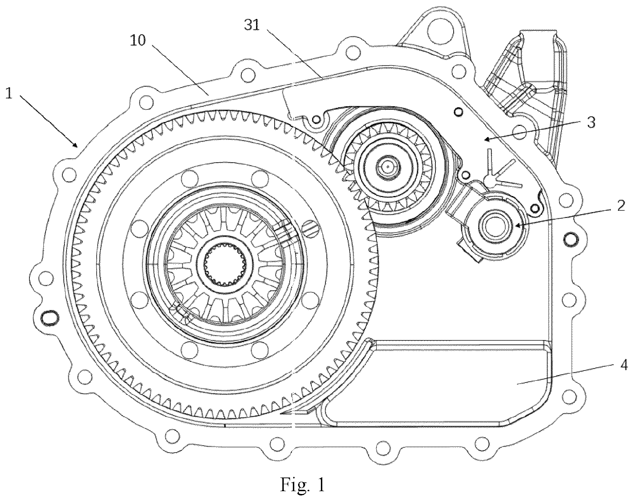

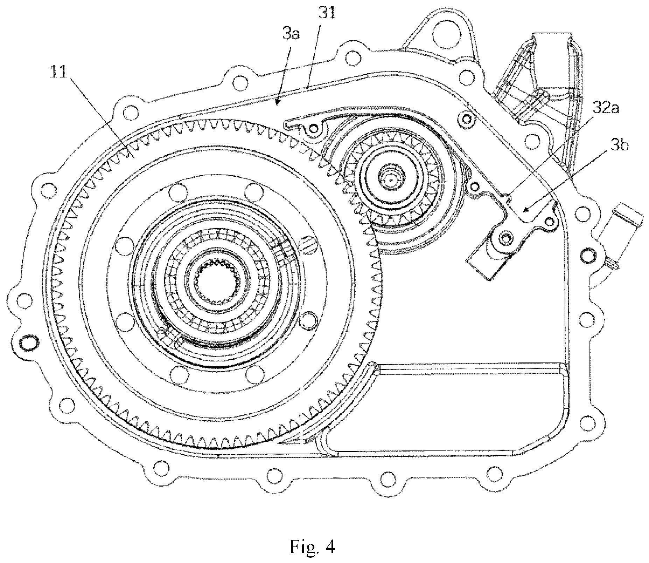

For brevity, only components that are closely related to the present invention are schematically shown in Figs. 1 to 6.

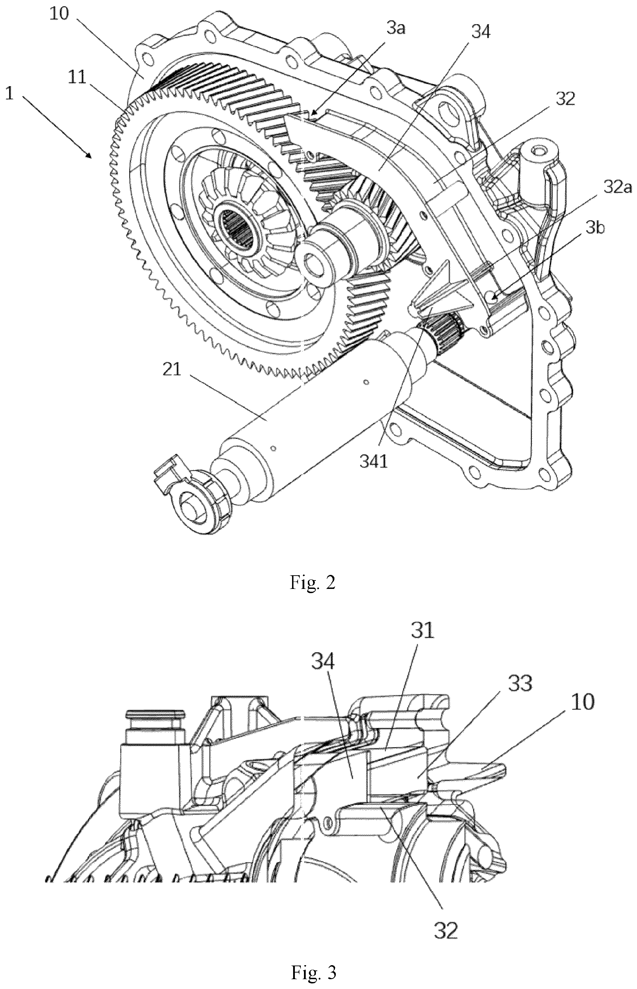

Figs. 1 and 2 schematically show an embodiment of the transmission system according to the present invention. The transmission system comprises a housing, and a reducer 1 and a motor 2 that are arranged in the housing, wherein the housing comprises a cover part 10 and a main housing not shown in Fig. 1, the cover part 10 covering the housing of the transmission system from an end face. In addition, a lubrication system is further arranged in the housing, comprising a fluid passage 3 and a liquid collection tank 4 that is used for a lubricating medium and approximately corresponds in height to a lower part of the reducer 1.

As shown in Fig. 2, the reducer 1 comprises a first gear 11 that is near the cover part 10 of the housing; in this embodiment, the first gear 11 is a reducer gear. In other optional embodiments that are not shown, the first gear may also be another gear of the reducer.

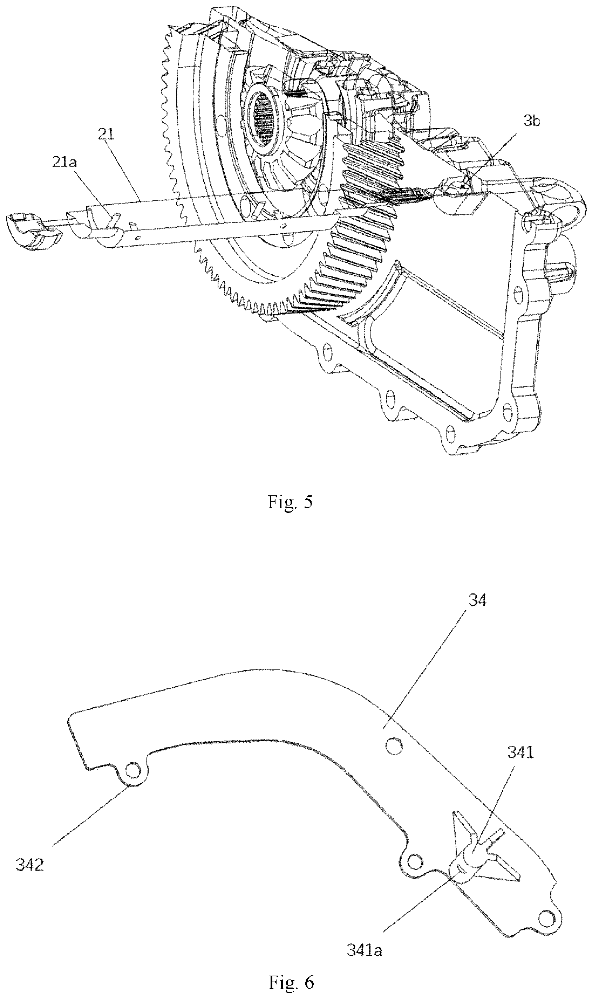

A motor shaft 21 of a motor 2 is also provided near the cover part 10 of the housing, wherein an axial direction of the motor shaft 21 and a central axis of the first gear 11 extend parallel to each other. The motor shaft 21 is provided with a hollow cavity; as shown in Fig. 5, multiple perforations 21a that extend radially are provided on the hollow cavity, used for connecting the hollow cavity with a motor winding that surrounds the outside of the motor shaft 21.

As shown in Figs. 1 and 2, a fluid passage 3 that extends between the reducer 1 and the motor shaft 21 is provided. This fluid passage 3 extends in a bent manner, and an inlet 3a thereof points to the first gear 11 of the reducer 1, and an outlet 3b thereof communicates with the hollow cavity of the motor shaft 21.

As shown in Fig. 3, the fluid passage 3 comprises a top wall 31, a bottom wall 32 and two side walls, that is, a first side wall 33 and a second side wall 34. As shown in Figs. 1 and 2, the top wall 31, the bottom wall 32 and the first side wall 33 are integrally cast with the cover part 10 of the housing of the transmission system, and the second side wall 34 is constructed as an independent baffle. As shown in Fig. 6, the second side wall 34 is constructed as a flat baffle that has a cross section which extends in a bend, and is fixedly connected to the bottom wall 32 by means of a fixing part 342 at a lower edge of the baffle, preferably by a threaded connection or rivet joint. Thus, a passage is formed which has a substantially rectangular cross section and is basically sealed in a length direction. A protrusion 341 that extends outward is further provided on the second side wall 34, the protrusion 341 comprising several reinforcement parts that extend radially. The protrusion 341 is further described in detail below.

As shown in Fig. 1, a housing wall of the main housing partially surrounds the first gear 11, and at the inlet 3a of the fluid passage 3, an extension line of the top wall 31 is tangent to the housing wall surrounding the first gear 11 of the reducer 1.

For clarity, the top wall 31 of the fluid passage 3 is invisible in Fig. 2, so that the interior of the fluid passage 3 is shown more clearly.

The outlet 3b of the fluid passage 3 is located at a terminal end of the fluid passage 3 and extends downward from the bottom wall 32, and communicates with the hollow cavity of the motor shaft 21. As shown in Fig. 5, a cavity of the outlet 3b communicates substantially perpendicularly with the hollow cavity of the motor shaft, and a main passage of the fluid passage 3 is thus formed, and lubricating medium that has been flung out by the first gear 11 passes from the inlet 3a through the main passage and into the hollow cavity of the motor shaft 21 from the outlet 3b.

In addition, the bottom wall 32 comprises a stop rib 32a that protrudes upward, this stop rib 32a extending in a width direction of the fluid passage 3 upstream of the outlet 3b, and correspondingly, the protrusion 341 of the second side wall 34 comprises a branch outlet 341a constructed as a through hole, and thus a branch passage is formed by means of the stop rib 32a and the branch outlet 341a of the protrusion 341.

When the transmission system operates, the first gear 11 of the reducer 1 rotates, and a lower part thereof carries up lubricating medium in the liquid collection tank 4, so that the first gear 11 and even other gears in the transmission system are lubricated. Lubricating medium that is flung off at a tangent by the first gear 11 enters the fluid passage 3 from the inlet 3a of the fluid passage 3. Since the motor shaft 21 of the motor 2 rotates, negative pressure is formed in the hollow cavity of the motor shaft 21, and said hollow cavity communicates with the outlet 3b of the fluid passage 3; therefore, the lubricating medium in the fluid passage 3 is continuously sucked into the hollow cavity of the motor shaft 21 under the effect of negative pressure, and is conveyed out via the radially extending perforation 21a from the hollow cavity to a winding outside, so as to cool the motor 2.

In addition, some of the lubricating medium flowing in the fluid passage 3 is intercepted by the stop rib 32a, and flows out from the branch outlet 341a. In the embodiment shown in Fig. 6, the branch outlet 341a points down, so that lubricating medium flowing out via the branch passage is conveyed out to a component located below the fluid passage 3, thereby lubricating same, and finally falls down and is collected in the liquid collection tank 4 below.

Thus, the lubricating medium can be actively guided from the reducer 1 to the motor 2 without the need for an additional pump apparatus, so that a dual function of lubrication and cooling can be realized with a simple structure.

According to another aspect of the present invention, a vehicle is further provided, comprising the transmission system described above. The vehicle may be a plug-in hybrid electric vehicle, or a battery electric vehicle or another type of motor vehicle. Based on the above, the vehicle can realize the functions of the motor component and motor described above, and has the advantages described above.

Certain features, structures or characteristics in one or more embodiments of the present application may be combined appropriately.

Unless otherwise defined, all of the terms (including technical and scientific terms) used herein have the same meanings as those commonly understood by those skilled in the art. It should also be understood that terms such as those defined in a common dictionary should be interpreted as having the same meanings as they have in the context of the related art, rather than being interpreted in an idealized or extremely formalized sense, unless expressly so defined herein.

The above is a description of the present invention and should not be regarded as limiting it. Although certain exemplary embodiments of the present invention have been described, those skilled in the art will readily understand that many modifications may be made to the exemplary embodiments without departing from the novel teaching and advantages of the present invention. Therefore, all such modifications are intended to be included within the scope of the present invention as defined by the claims. It should be understood that the above is a description of the present invention and the present invention should not be deemed to be limited to the specific embodiments disclosed herein; in addition, modifications made to the disclosed embodiments and other embodiments are intended to be included within the scope of the present invention.

### Key to the drawings:

- 1: Reducer
- 10: Cover part
- 11: First gear
- 2: Motor
- 21: Motor shaft
- 21a: Perforation
- 3: Fluid passage
- 3a: Inlet
- 3b: Outlet
- 31: Top wall
- 32: Bottom wall
- 32a: Stop rib
- 33: First side wall
- 34: Second side wall
- 341: Protrusion
- 341a: Branch outlet
- 342: Fixing part

## Claims

1. A transmission system for a vehicle, comprising:
a housing comprising a main housing and a cover part (10);
a reducer (1) and a motor (2) arranged in the housing;
a lubrication system arranged in the housing and comprising:
a fluid passage (3) extending between the reducer (1) and the motor (2),
wherein the fluid passage (3) extends from a first gear (11) of the reducer (1) to a motor shaft (21) of the motor (2) to guide the lubricating medium to the motor (2) by means of the fluid passage (3) to cool the motor (2),
wherein the fluid passage (3) comprises a bottom wall (32) and a first side wall (33), and the bottom wall (32) and the first side wall (33) are integrally constructed with the cover part of the housing,
and **characterized in that**
the fluid passage (3) comprises a stop rib (32a) arranged on the bottom wall (32) and a branch passage cooperating with the bottom wall (32) for shunting the lubricating medium guided in the fluid passage (3).

2. The transmission system according to Claim 1, **characterized in that**,
the lubrication system comprises a baffle forming a second side wall (34) of the fluid passage (3) remote from the housing, said second side wall being fixedly connected to the bottom wall (32).

3. The transmission system according to Claim 1, **characterized in that**,
an inlet (3a) of the fluid passage (3) is directed to the first gear (11) of the reducer (1) to receive a lubricating medium transmitted from the first gear of the reducer (1) so that it can be fed into the fluid passage (3) via the inlet.

4. The transmission system according to Claim 3, **characterized in that**,
the housing wall of the main housing at least partially surrounds the first gear (11), and at the inlet of the fluid passage (3) an extension line of the top wall (31) of the fluid passage (3) is tangent to the housing wall surrounding the first gear (11).

5. The transmission system according to Claim 1, **characterized in that**,
an outlet (3b) of the fluid passage (3) extends downward from a bottom wall (32) of the fluid passage (3) and is in communication with a hollow cavity of the motor shaft (21).

6. The transmission system according to Claim 5, **characterized in that**,
the hollow cavity includes at least one perforation (21a) extending in a radial direction.

7. The transmission system according to Claim 6, **characterized in that**,
a negative pressure is generated in the hollow cavity by the rotation of the motor shaft (21), thereby pumping the lubricating medium from the reducer (1) to the motor (2) via the fluid passage (3).

8. The transmission system according to Claim 1, **characterized in that**,
the branch passage includes a hollow protrusion (341) extending outwardly from the second sidewall (34), wherein the protrusion (341) includes a branch outlet (341a).

9. The transmission system according to Claim 1, **characterized in that**,
the first gear (11) is a reducer gear.

10. A vehicle comprising the transmission system of any one of claims 1 to 9.

## Patentansprüche

1. Getriebesystem für ein Fahrzeug, umfassend:
ein Gehäuse, das ein Hauptgehäuse und ein Deckelteil (10) umfasst;
ein Untersetzungsgetriebe (1) und einen Motor (2), die in dem Gehäuse angeordnet sind;
ein Schmiersystem, das in dem Gehäuse angeordnet ist und umfasst:
einen Fluidkanal (3), der sich zwischen dem Untersetzungsgetriebe (1) und dem Motor (2) erstreckt,
wobei sich der Fluidkanal (3) von einem ersten Zahnrad (11) des Untersetzungsgetriebes (1) zu einer Motorwelle (21) des Motors (2) erstreckt, um das Schmiermedium mit dem Fluidkanal (3) zum Motor (2) zu leiten, um den Motor (2) zu kühlen,
wobei der Fluidkanal (3) eine Bodenwand (32) und eine erste Seitenwand (33) umfasst, und die Bodenwand (32) sowie die erste Seitenwand (33) einstückig mit dem Deckelteil des Gehäuses ausgebildet sind,
**dadurch gekennzeichnet, dass**
der Fluidkanal (3) eine Staurippe (32a) umfasst, die an der Bodenwand (32) angeordnet ist, und einen mit der Bodenwand (32) zusammenwirkenden Zweigkanal zum Ableiten des in dem Fluidkanal (3) geführten Schmiermediums umfasst.

2. Getriebesystem nach Anspruch 1, **dadurch gekennzeichnet, dass** das Schmiersystem eine Leitwand umfasst, die eine von dem Gehäuse abgewandte zweite Seitenwand (34) des Fluidkanals (3) bildet, wobei die zweite Seitenwand (34) fest mit der Bodenwand (32) verbunden ist.

3. Getriebesystem nach Anspruch 1, **dadurch gekennzeichnet, dass** ein Einlass (3a) des Fluidkanals (3) auf das erste Zahnrad (11) des Untersetzungsgetriebes (1) gerichtet ist, um ein von dem ersten Zahnrad des Untersetzungsgetriebes (1) abgegebenes Schmiermedium aufzunehmen, so dass es über den Einlass in den Fluidkanal (3) eingespeist werden kann.

4. Getriebesystem nach Anspruch 3, **dadurch gekennzeichnet, dass** die Gehäusewand des Hauptgehäuses das erste Zahnrad (11) zumindest teilweise umgibt, und an dem Einlass des Fluidkanals (3) eine Verlängerungslinie der Deckenwand (31) des Fluidkanals (3) die das erste Zahnrad (11) umgebende Gehäusewand tangential berührt.

5. Getriebesystem nach Anspruch 1, **dadurch gekennzeichnet, dass** ein Auslass (3b) des Fluidkanals (3) sich von einer Bodenwand (32) des Fluidkanals (3) nach unten erstreckt und mit einem Hohlraum der Motorwelle (21) verbunden ist.

6. Getriebesystem nach Anspruch 5, **dadurch gekennzeichnet, dass** der Hohlraum mindestens eine Perforation (21a) aufweist, die sich in einer radialen Richtung erstreckt.

7. Getriebesystem nach Anspruch 6, **dadurch gekennzeichnet, dass** durch die Rotation der Motorwelle (21) in dem Hohlraum ein Unterdruck erzeugt wird, wodurch das Schmiermedium von dem Untersetzungsgetriebe (1) über den Fluidkanal (3) zum Motor (2) gepumpt wird.

8. Getriebesystem nach Anspruch 1, **dadurch gekennzeichnet, dass** der Zweigkanal einen hohlen Vorsprung (341) aufweist, der sich von der zweiten Seitenwand (34) nach außen erstreckt, wobei der Vorsprung (341) einen Zweigauslass (341a) aufweist.

9. Getriebesystem nach Anspruch 1, **dadurch gekennzeichnet, dass** das erste Zahnrad (11) ein Untersetzungszahnrad ist.

10. Fahrzeug, umfassend das Getriebesystem nach einem der Ansprüche 1 bis 9.

## Revendications

1. Système de transmission pour un véhicule, comprenant:
un carter comprenant un carter principal et une pièce de couvercle (10);
un réducteur (1) et un moteur (2) disposés dans le carter:
un système de lubrification disposé dans le carter et comprenant:
un passage de fluide (3) s'étendant entre le réducteur (1) et le moteur (2),
dans lequel le passage de fluide (3) s'étend d'un premier engrenage (11) du réducteur (1) jusqu'à un arbre moteur (21) du moteur (2) pour guider le milieu lubrifiant vers le moteur (2) au moyen du passage de fluide (3) afin de refroidir le moteur (2),
dans lequel le passage de fluide (3) comprend une paroi de fond (32) et une première paroi latérale (33), et la paroi de fond (32) et la première paroi latérale (33) sont réalisées d'un seul tenant avec la pièce de couvercle du carter,
et **caractérisé en ce que**
le passage de fluide (3) comprend une nervure de retenue (32a) disposée sur la paroi de fond (32) et un passage de dérivation coopérant avec la paroi de fond (32) pour dériver le milieu lubrifiant guidé dans le passage de fluide (3).

2. Système de transmission selon la revendication 1, **caractérisé en ce que** le système de lubrification comprend une paroi de guidage formant une seconde paroi latérale (34) du passage de fluide (3) distante du carter, ladite seconde paroi latérale étant reliée de manière fixe à la paroi de fond (32).

3. Système de transmission selon la revendication 1, **caractérisé en ce que** une entrée (3a) du passage de fluide (3) est dirigée vers le premier engrenage (11) du réducteur (1) pour recevoir un milieu lubrifiant transmis depuis le premier engrenage du réducteur (1) de sorte qu'il puisse être introduit dans le passage de fluide (3) via l'entrée.

4. Système de transmission selon la revendication 3, **caractérisé en ce que** la paroi de carter du carter principal entoure au moins partiellement le premier engrenage (11), et à l'entrée du passage de fluide (3), une ligne de prolongement de la paroi de plafond (31) du passage de fluide (3) est tangente à la paroi de carter entourant le premier engrenage (11).

5. Système de transmission selon la revendication 1, **caractérisé en ce que** une sortie (3b) du passage de fluide (3) s'étend vers le bas depuis une paroi de fond (32) du passage de fluide (3) et est en communication avec une cavité creuse de l'arbre moteur (21).

6. Système de transmission selon la revendication 5, **caractérisé en ce que** la cavité creuse comprend au moins une perforation (21a) s'étendant dans une direction radiale.

7. Système de transmission selon la revendication 6, **caractérisé en ce que** une dépression est générée dans la cavité creuse par la rotation de l'arbre moteur (21), pompant ainsi le milieu lubrifiant du réducteur (1) vers le moteur (2) via le passage de fluide (3).

8. Système de transmission selon la revendication 1, **caractérisé en ce que** le passage de dérivation comprend une saillie creuse (341) s'étendant vers l'extérieur depuis la seconde paroi latérale (34), dans lequel la saillie (341) comprend une sortie de dérivation (341a).

9. Système de transmission selon la revendication 1, **caractérisé en ce que** le premier engrenage (11) est un engrenage de réducteur.

10. Véhicule comprenant le système de transmission selon l'une quelconque des revendications 1 à 9.
